# EUROPEAN PATENT SPECIFICATION

(11) **EP 0 410 490 B1**
(45) Date of publication and mention of the grant of the patent: **20.09.1995**
(21) Application number: 90114512.8
(22) Date of filing: 27.07.1990
(51) Int. Cl.: G06K 15/12, H04N 1/113, H04N 1/207

(54) **Laser beam printer**
Laserstrahldrucker
Imprimante à rayons laser

(30) Priority: 28.07.1989 JP 197223/89; 28.07.1989 JP 197224/89; 28.07.1989 JP 197225/89; 28.07.1989 JP 197226/89
(43) Date of publication of application: 30.01.1991
(73) Proprietor: SHARP KABUSHIKI KAISHA, Osaka (JP)
(72) Inventor: Yatsunami, Kenroh, Yamatokoriyama-shi, Nara-ken (JP)
(74) Representative: TER MEER STEINMEISTER & PARTNER GbR

(56) References cited:
- DE-A- 3 726 375
- DE-B- 2 034 679
- FR-A- 2 383 471
- US-A- 3 720 785
- US-A- 4 327 287

## Description

### Field of the Invention

The present invention relates to a laser beam printer in accordance with the precharacterizing part of claim 1.

Such a laser beam printer is known from US-A-4 327 287.

### Description of the Prior Art

Conventionally, there has been proposed a laser beam printer in which an original is irradiated by a bar lamp light source, the reflected light is received by a Charge Coupled Device (CCD) and then converted into an image signal, a laser beam modulated by the image signal is irradiated on a photosensitive drum to form an electrostatic latent image, the electrostatic latent image thus formed is develcped and thereafter transferred into a paper to print out an original image thereon (see US Patent Nos. 4,549,223, 4,040,737, 4,199,789 and 4,587,418). In the conventional laser beam printer, however, it is required to use a lot of optical systems such as a lamp light source, a mirror group and a lens which serve as means for reading the original. In particular, a digital copier and a facsimile in which ordinary papers are used require high density reading of about 16 dots/mm [400 dpi (dot per inch)]. Therefore, it is necessary to use an expensive high density CCD or high precision optical systems. Accordingly, production costs are increased and adjustment of the optical systems is complicated.

In addition, high assembly precision is required.

US-A-4 327 287 describes a laser scanning apparatus in which scanning for reading a document and scanning of an electrostatic latent image forming means for writing information detected from the light reflected from the original is carried out by a single laser light source and includes a signal processing circuit for processing an image signal and an optical modulator receiving an output signal from the signal processing circuit for modulating the incident laser beam by intensity modulation according to the output signal of the signal processing circuit.

US-A-3 720 785 describes a recording system and a method for a copying machine including a laser device for generating a laser beam, which is directed to an optical modulator, which is placed in the path of the laser beam. The modulated laser beam is directed to an exposure location through which a copy paper moves for copying the original image on the copy paper. The image of an original is scanned by a second light beam, which is generated by a second light source, which may be a second laser light source.

It is an object of the present invention to provide a laser beam printer with low production costs and has non complicated assembly and adjustment of the optical systems.

The above object is solved according to the present invention by a laser beam printer including a single laser beam source and beam separation means for separating the beam output from the laser beam source into a first beam and a second beam, the first beam irradiating one of reflecting surfaces of the polygon mirror and the second beam irradiating another reflecting surface of the polygon mirror;
photoelectric conversion means for detecting light reflected from an original to convert an image on the original into an image signal when the first beam illuminates to scan the original by the rotation of the polygon mirror; and
a photosensitive member onto which the image is written by the scanning of the second beam along with the rotation of the polygon mirror, characterized in that beam control means are provided which control the single laser beam source to alternately output the first beam having a constant quantity of light and the second beam modulated by an image signal.

This laser beam printer has an advantageous development in that it includes an electronic light shutter means inserted in the optical path of the second beam from the separation means to the polygon mirror. Preferably, the beam separation means is a beam splitter.

### BRIEF DESCRIPTION OF THE DRAWINGS

- **Fig. 1**: is a block diagram of a laser beam printer according to the present invention;
- **Fig. 2**: is a block diagram showing principal portions of the laser beam printer according to the present invention;
- **Fig. 3**: is a time chart for explaining operation of the laser beam printer according to the present invention;

### DESCRIPTION OF A PREFERRED EMBODIMENT

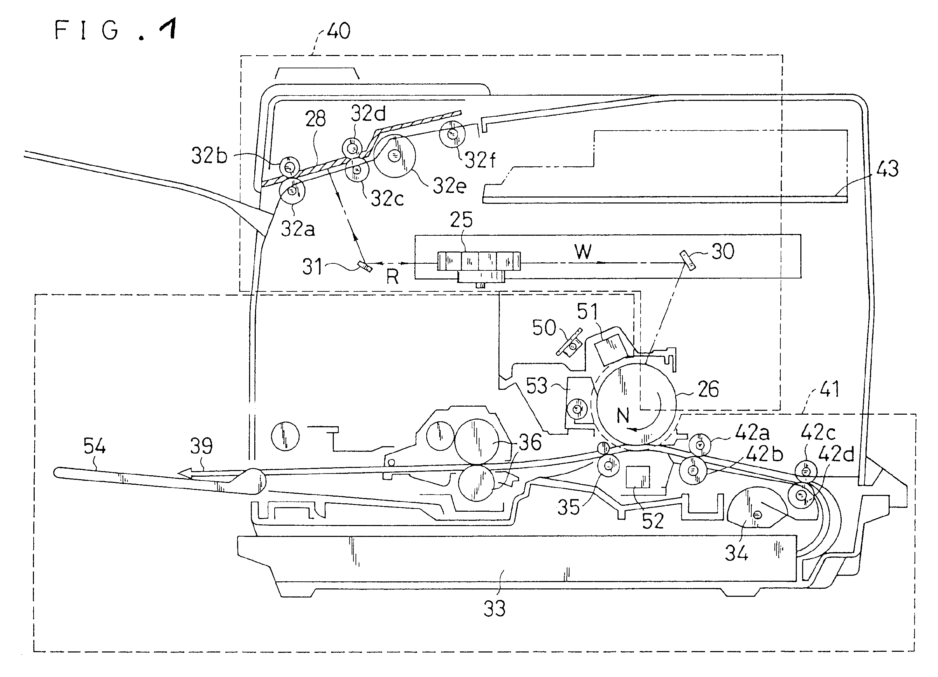

There will be described the laser beam printer of the present invention with reference to Figs. 1 to 3.

As shown in Fig. 1, a laser beam printer of the present embodiment comprises a laser beam scanning device 40 and recording means 41 for recording based on an electrostatic latent image on a photosensitive drum 26.

The laser beam scanning device 40 has a reflecting mirror 31 provided on an optical axis of a laser beam R emitted on the left side of a rotatable polygon mirror 25 for reading an original 28 provided on the optical axis of the laser beam R reflected by the reflecting mirror 31 and a reflecting mirror 30 provided on an optical axis of a laser beam W emitted on the right side of the polygon mirror 25 for forming the electrostatic latent image on the photosensitive drum 26. The photosensitive drum 26 is provided on the optical axis of the laser beam W reflected by the reflecting mirror 30.

Further, the laser beam printer comprises a main control unit 43 for reading an original 28 and forming the electrostatic latent image on the photosensitive drum 26 by time division, as is described hereunder.

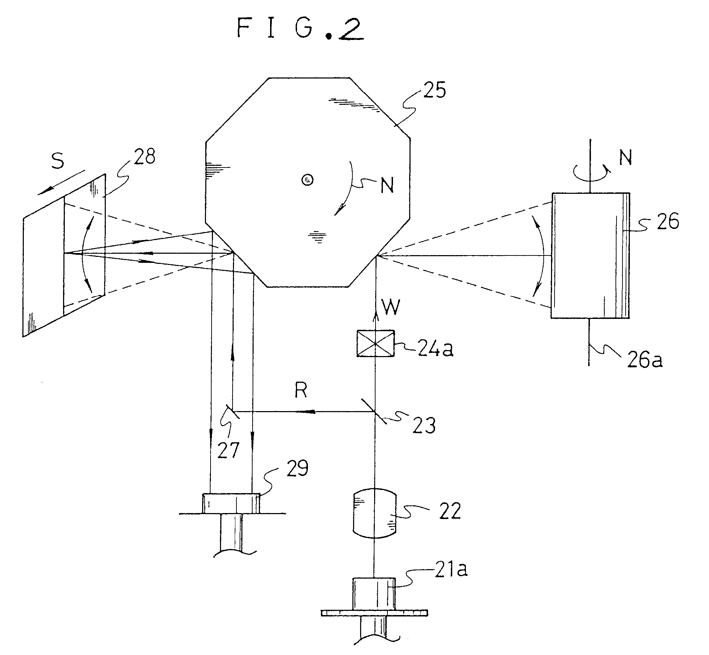

As shown in Fig. 2, the laser beam scanning device 40 has a laser beam source 21a and a lens 22 provided on an optical axis of a laser beam emitted from the laser beam source 21a for focussing the laser beam R incident on the original 28 and the laser beam W incident on the photosensitive drum 26 on respective faces. A semiconductor laser diode is used as the laser beam source 21a.

On the optical axis of the laser beam emitted through the lens 22 are provided a laser beam splitter 23 for dividing the laser beam into the laser beam R which goes straight in a left direction and the laser beam W which goes straight there-through. An electronic light shutter 24a is provided on the optical axis of the laser beam W between the beam splitter 23 and a single polygon mirror 25 which is provided on the optical axis of the laser beam R reflected by a reflecting mirror 27 and that of the laser beam W which passes the light shutter 24a. The original 28 is provided on the optical axis of the laser beam R reflected by the original 28 reaches the polygon mirror 25. The rotatable polygon mirror 25 is polyhedron-shaped. Accordingly, a reflecting direction of the laser beam R is incident in a constant direction is changed as a face angle of the rotating polygon mirror 25 is changed. Thereby, the original 28 is scanned linearly. In other words, the laser beam R scans the range on the face parallel with a paper and shown in broken lines according to the rotation of the polygon mirror 25.

A photoelectric conversion device 29 is provided on the optical axis of the laser beam R reflected by the polygon mirror 25. The photoelectric conversion device 29 converts the incident light into an output voltage or output current according to the intensity thereof. On the optical axis of the reflected light is provided the reflecting mirror 27 which is small in size such that an optical image of the reflected laser beam R is not affected. Consequently, the incidence of the reflected laser beam R on the photoelectric conversion device 29 is not adversely affected.

On the other hand, the photosensitive drum 26 is provided on the optical axis of the laser beam W reflected by the polygon mirror 25. The reflecting direction of the laser beam W is changed for the incidence in the constant direction by the polygon mirror 25 to cause the laser beam W to perform scanning linearly on the photosensitive drum 26. In other words, the laser beam W scans the range on the face parallel with the paper and shown by the broken line. The surface of the photosensitive drum 26 is charged when the electrostatic latent image is formed. If the light is received, the surface of the photosensitive drum 26 has resistance decreased so as to be exposed. Accordingly, if the light projected onto the photosensitive drum 26 is converted into the image, the electrostatic latent image is formed on the surface of the photosensitive drum 26.

As shown in Fig. 1, the recording means 41 includes a paper cassette 33 in which recording papers are housed, a pick-up roller 34 for picking up the recording papers from the paper cassette 33 and delivery devices 42a to 42d comprised of a delivery roller group for delivering the recording papers to the photosensitive drum 26. In addition, the recording means 41 includes a main charger 51, a developing device (not shown), a transferring corona discharger 52, a cleaning device 53 and a discharge lamp 50 around the photosensitive drum 26.
Furthermore, the recording means 41 includes a separation roller 35 for separating the recording paper which is come in contact with the periphery of the photosensitive drum 26, a fuser roller 36 for fixing a toner image transferred onto the recording paper and a stacker 54 for ejection.

With the above construction, in the case that the original 28 is read, the laser beam R divided by the beam splitter 23 is reflected by the reflecting mirror 27 and then incident on the polygon mirror 25. The laser beam R reflected by the polygon mirror 25 is directed to the original 28 and then irradiated on the surface thereof. The laser beam R performs scanning linearly from one end to the other end of the original 28 as the polygon mirror 25 rotates. The laser beam R reflected by the original 28 is modulated in intensity according to density of characters, graphics or the like, and then incident on the polygon mirror 25 again. The laser beam R is reflected by the polygon mirror 25, incident on the photoelectric conversion device 29 and then converted into an electric signal. The electric signal is inputted to an image processing circuit (not shown). Thus, lines of the original 28 are read.

When the laser beam R finishes reading for one scanning on the surface of the original 28 as described above, the original 28 is moved for linear scanning in a vertical direction of S by the operation of delivery devices 32a to 32f. Then, the laser beam R scans the surface of the original 28 linearly as described above. By repeating the above operation, the original 28 can be scanned entirely. Thus, the original can be read by the laser beam R which can be dealt with as a point light source.
Consequently, the original can be read with high precision by means of a cheap pin photodiode.

On the other hand, at the time of recording, residual charges on the photosensitive drum 26 are first removed by the discharge lamp 50, charged uniformly by the main charger 51 and then the electrostatic latent image is formed on the photosensitive drum 26 according to the following operation.

An image signal for recording based on the information read from the original is provided by the image processing circuit (not shown) to modulate the intensity of the laser beam W emitted by the laser beam source 21a. The laser beam W thus modulated is reflected by the polygon mirror 25 and then incident on the surface of the photosensitive drum 26. The laser beam W performs scanning linearly from one end to the other end of the photosensitive drum 26 as the polygon mirror 25 rotates. Thereby, the electrostatic latent image of the lines is formed on the photosensitive drum 26. At the same time, the photosensitive drum 26 rotates in a rotary direction of N around an axis 26a, and thereby linear scanning of the laser beam W is performed entirely to form the electrostatic latent image of the face on the photosensitive drum 26.

Next, toner which is housed in a developing box (not shown) adheres to the electrostatic latent image formed on the photosensitive drum 26 and thereby the electrostatic latent image is developed. On the other hand, the recording paper is picked up from the paper cassette 33 by the pick-up roller 34 and then delivered to the photosensitive drum 26 by delivery devices 42a to 42d. The recording paper is come in contact with the periphery of the surface of the photosensitive drum 26. Then, the image on the photosensitive drum 26 is transferred onto the surface of the recording paper by the transferring corona discharger 52 while the recording paper is moved synchronously with the rotation of the photosensitive drum 26. Thereafter, the recording paper is separated from the photosensitive drum 26 by the separation roller 35, while the residual toner on the photosensitive drum 26 is removed by the cleaning device 53 and then discharged by the discharge lamp 50. When the recording paper separated from the photosensitive drum 26 passes the fuser roller 36 which serves as a fixing device, the toner image is thermally fixed onto the recording paper so as to be recorded as an image of characters, graphics or the like. Thereafter, the recording paper is ejected to the stacker 54 on the outside of the laser beam printer. A series of moving path of the recording papers is shown by an arrow 39.

The laser beam source 21a is controlled so as to output a constant quantity of light as the first laser beam R for original reading. The laser beam source 21a is further used as electrostatic latent image forming means. Therefore, the intensity of the second laser beam W is modulated by an image signal output from the image processing circuit (not shown).

The main control unit 43 includes the image processing circuit (not shown) to which a signal output from a photoelectric conversion device is input at the time of reading the original 28, a line buffer memory in which an output of the image processing circuit is stored temporarily, time division control means for time dividing the original reading means and the electrostatic latent image forming means, a control program of the time division control means and the like.

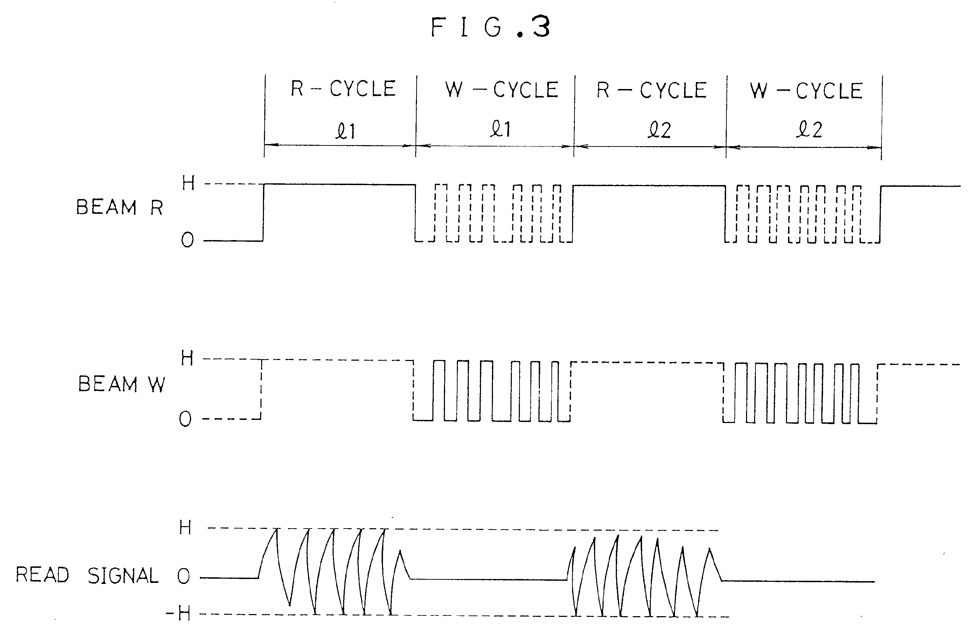

With the above construction, the laser beam R incident on the original reading means and the laser beam W incident on the electrostatic latent image forming means 26 are respectively controlled by time division at every time called R and W cycles by means of the main control unit 43 as shown in Fig. 3. In other words, the original reading means and the electrostatic latent image forming means are controlled by time division. "0" shown by the laser beams R and W and a reading signal indicates that there is no output signal, "H" or "-H" indicates a certain outut signal level.

At the time of R cycle, the main control unit 43 provides a direct current to control a semiconductor laser diode built in the laser beam source 21a such that it outputs the constant quantity of light. The laser beam emitted from the laser beam source 21a is divided by a beam splitter 23. The laser beam R thus formed is reflected by a reflecting mirror 27 and then incident on a polygon mirror 25. The laser beam R reflected by the polygon mirror 25 is directed to the original 28 and then irradiated on the surface of the original 28. The laser beam R performs scanning linearly from one end to the other end of the original 28 as the polygon mirror 25 rotates. The laser beam R reflected by the original 28 is modulated in intensity according to density of characters, graphics or the like and then incident on the polygon mirror 25 again. The reflected laser beam R is reflected by the polygon mirror 25, incident on a photoelectric conversion device 29 and then converted into an electric signal. The electric signal is inputted to the image processing circuit (not shown). Thus, lines of the original 28 are read. When the laser beam R finishes reading for one scanning line on the surface of the original 28, the original 28 is moved for a linear scanning pitch in a vertical direction of S by operation of delivery devices 32a to 32f. Then, the laser beam R scans the surface of the original 28 linearly as described above. The above operation is repeated.

On the other hand, during R cycle time ℓ 1, an original reading signal is processed in the image processing circuit and then stored in the line buffer memory. At the time of R cycle, the laser beam W is shut by the electronic shutter 24a.

Next, at the time of W cycle, the main control unit 43 takes out the original reading signal from the image processing circuit (not shown) as an image signal for recording by means of, for example, the line buffer memory. The image signal modulates a current for driving the semiconductor laser diode built in the laser beam source 21a. Thereby, the laser beam W modulated for recording is reflected by the polygon mirror 25 and then incident on the surface of the photosensitive drum 26. Since the laser beam W performs scanning linearly from one end to the other end of the photosensitive drum 26 as the polygon mirror 25 rotates, an electrostatic latent image of lines is formed on the photosensitive drum 26. At the same time, since the photosensitive drum 26 rotates in a direction of N around an axis 26a and thereby the laser beam W performs scanning linearly, the electrostatic latent image of the surface is formed on the photosensitive drum 26. On the other hand, at the time of the W cycle, the laser beam R shown in a broken line is modulated for recording. During W cycle time ℓ 1, the original reading signal is controlled so as to be invalid.

As described above, the original is read and the electrostatic latent image is formed by time division from the W cycle time ℓ 1 to the R cycle time ℓ 2 and from the R cycle time ℓ 2 to the W cycle time ℓ 2. By repeating the above operation, the original 28 can be read and scanned entirely. Thereby, the electrostatic latent image for one sheet is formed on the photosensitive drum 26.

On the other hand, at the time of recording, the photosensitive drum 26 is first charged uniformly by the main charger 51 and then the electrostatic latent image is formed on the photosensitive drum 26 according to the above operation. Thereafter, printing out onto the paper is performed in similar to the first embodiment.

The present embodiment of the laser printer has the advantage that the original reading means and the electrostatic latent image forming means are controlled by time division and therefore a special optical modulator for modulation is not required.

As described above, in the laser beam printer according to the invention, the laser beam scanning is used in reading and recording the original by means of the single polygon mirror 25. Consequently, a lot of mirror groups are not required in reading the original.

In case that the original is read and the electrostatic latent image is formed on the photosensitive drum, two light sources are not necessary. Accordingly, production costs are decreased and the assembly and adjustment of the optical systems is not complicated.

It is easy by the first laser beam R to synchronize scanning for reading the original with scanning by the second lase beam W for forming the electrostatic latent image on the photosensitive member. The original is read by means of the laser beam which serves as the point light source. Consequently, it is not required to use a lot of optical systems which are conventionally provided for reading the original. In addition, it is possible to read the original with a simple construction and high precision by means of a cheap device such as a pin photodiode. Furthermore, it is not required to use an expensive high density CCD or the like as original reading means.

Therefore, production costs are decreased and the adjustment and assembly of the optical systems is not complicated.

## Claims

1. A laser beam printer including:
a rotatable polygon mirror (25);
beam generation means (21a) including a single laser beam source and beam separation means (23) for separating the beam output from the laser beam source into a first beam (R) and a second beam (W) , the first beam (R) irradiating one of reflecting surfaces of the polygon mirror (25) and the second beam (W) irradiating another reflecting surface of the polygon mirror (25); photoelectric conversion means (29) for detecting light reflected from an original (28) to convert an image on the original (28) into an image signal when the first beam (R) illuminates to scan the original (28) by the rotation of the polygon mirror (25); and
a photosensitive member (26) onto which the image is written by the scanning of the second beam (W) along with the rotation of the polygon mirror (25),
**characterized in that** beam control means (43) are provided which control the single laser beam source (21a) to alternately output the first beam (R) having a constant quantity of light and the second beam (W) modulated by an image signal.

2. The laser beam printer according to claim 1, further comprising an electronic light shutter (24a) inserted in an optical path of the second beam (W) from the separation means (23) to the polygon mirror (25).

3. The laser beam printer as claimed in claim 1, **characterized in that** the beam separation means (23) is a beam splitter.

## Patentansprüche

1. Laserstrahldrucker mit:
- einem drehbaren Polygonspiegel (25);
- einer Strahlerzeugungseinrichtung (21a) mit einer einzelnen Laserstrahlquelle und einer Strahlaufteileinrichtung (23) zum Aufteilen des von der Laserstrahlquelle ausgegebenen Strahls in einen ersten Strahl (R) und einen zweiten Strahl (W), wobei der erste Strahl (R) auf eine der reflektierenden Flächen des Polygonspiegels (25) strahlt, und der zweite Strahl (W) auf eine andere reflektierende Fläche des Polygonspiegels (25) strahlt;
- einer photoelektrischen Wandlereinrichtung (29) zum Erfassen des von einer Vorlage (28) reflektierten Lichts, um ein Bild auf der Vorlage (28) in ein Bildsignal umzusetzen, wenn der erste Strahl (R) einstrahlt, um durch die Drehung des Polygonspiegels (25) die Vorlage (28) abzurastern; und
- einem photoempfindlichen Teil (26), auf das das Bild durch Abrastern des zweiten Strahls (W) entsprechend der Verdrehung des Polygonspiegels (25) geschrieben wird;
**dadurch gekennzeichnet, daß** eine Strahlsteuereinrichtung (43) vorhanden ist, die die einzelne Laserstrahlquelle (21a) so steuert, daß diese abwechselnd den ersten Strahl (R) mit konstanter Lichtmenge sowie den mit einem Bildsignal modulierten zweiten Strahl (W) ausgibt.

2. Laserstrahldrucker nach Anspruch 1, ferner mit einer elektronischen Lichtblende (24a), die in den optischen Pfad des zweiten Strahls (W) von der Aufteileinrichtung (23) zum Polygonspiegel (25) eingesetzt ist.

3. Laserstrahldrucker nach Anspruch 1, **dadurch gekennzeichnet, daß** die Strahlaufteileinrichtung (23) ein Strahlteiler ist.

## Revendications

1. Imprimante à faisceau laser comprenant:
un miroir polygonal rotatif (25);
un moyen de génération de faisceau (21a) comprenant une source de faisceau laser unique et un moyen de séparation (23) du faisceau issu de la source de faisceau laser en un premier faisceau (R) et un second faisceau (W), le premier faisceau (R) illuminant une des surfaces réfléchissantes du miroir polygonal (25) et le second faisceau (W) illuminant une autre surface réfléchissante du miroir polygonal (25); un moyen de conversion photo-électrique (29) pour détecter la lumière réfléchie par un original (28) et convertir une image figurant sur l'original (28) en un signal d'image quand le premier faisceau (R) illumine et balaie l'original (28) par rotation du miroir polygonal; et
un élément photosensible (26) sur lequel est transcrite l'image par balayage du second faisceau (W) lors de la rotation du miroir polygonal (25),
**caractérisée en ce que** sont prévus des moyens de commande de faisceau (43) pour commander la source de faisceau laser unique (21a) et lui faire émettre alternativement le premier faisceau (R) d'intensité lumineuse constante et le second faisceau (W) modulé par un signal d'image.

2. Imprimante à faisceau laser selon la revendication 1, comportant en outre un obturateur de lumière électronique (24a) inséré sur le chemin optique du second faisceau (W) entre le moyen de séparation (23) et le miroir polygonal (25).

3. Imprimante à faisceau laser selon la revendication 1, **caractérisée en ce que** le moyen de séparation de faisceau (23) est un séparateur de faisceau.
